# EUROPEAN PATENT APPLICATION

(11) **EP 4 768 531 A1**
(43) Date of publication of application: **01.07.2026**
(21) Application number: 25226468.4
(22) Date of filing: 22.12.2025
(51) Int. Cl.: C08K 3/016, C08K 5/5313, C08K 7/28, C08K 7/14, C08L 73/00, C09K 21/00

(54) **POLYKETONE RESIN COMPOSITION WITH SUPERIOR FIRE RESISTANCE AND THERMAL RUNAWAY PREVENTION PERFORMANCE**

(30) Priority: 26.12.2024 KR 20240197104
(71) Applicant: Desco Co., Ltd., Gyeongsangbuk-do 39909 (KR)
(72) Inventor: PARK, Bong Hyun, 15863 Gyeonggi-do (KR); LEE, So Yoon, 42909 Daegu, (KR); LIM, Jun Chan, 42215 Daegu (KR); KIM, Ju Hyeok, 42028 Daegu (KR); PARK, Sung Min, 39223 Gyeongsangbuk-do (KR)
(74) Representative: AWA Sweden AB

(57) **Abstract**

Disclosed is a polyketone resin composition containing 29 to 34 wt% of a polyketone resin, 10 to 50 wt% of glass fiber, 10 to 50 wt% of a fire retardant, and 5 to 8 wt% of a flame retardant.

The polyketone resin composition significantly improves the flame retardancy and high fire resistance of polyketone and thus is applicable to all industries including eco-friendly automobiles, energy storage devices, and other industries using lithium batteries.

## Description

### BACKGROUND OF THE INVENTION

### Field of the Invention

The present invention relates to a polyketone resin composition and more particularly, to a polyketone resin composition having excellent flame retardancy and high fire resistance.

### Description of the Related Art

Batteries used in eco-friendly vehicles, such as electric vehicles, hydrogen electric vehicles, hybrid vehicles, and plug-in hybrid vehicles, as well as energy storage systems (ESSs), require high flame retardancy and high fire resistance in components based on flame retardant materials, such as battery housings, inverter housings, and battery busbars due to thermal runaway and safety concerns.

In particular, thermal runaway refers to a phenomenon in which the internal temperature of a battery rapidly rises, accelerating chain heat generation and serves as a criterion for the high flame retardancy and high fire resistance required of battery components in order to prevent fires or explosions in vehicles or energy storage systems.

Polyketone resins are high-performance thermoplastic polymers and are terpolymers or multiple copolymers composed of carbon monoxide, an ethylenically unsaturated compound, and at least one olefinically unsaturated hydrocarbon compound.

In particular, polyketone resins having a structure in which carbon monoxide repeating units, ethylenically unsaturated compound repeating units, and propylenically unsaturated compound repeating units are alternately linked to one another are beneficial for various applications due to superior mechanical and thermal properties, excellent processability, and high flame retardancy, impact resistance, wear resistance, chemical resistance, calcium chloride resistance, freeze resistance, moisture absorption resistance, and gas barrier properties. When polyketone resins are combusted, the ketone group (C=O) reacts with hydrogen to produce water, resulting in formation of char. The formed char layer blocks oxygen and heat, imparting flame retardancy. Furthermore, the gases emitted during combustion have low toxicity due to the polymer structure based on only carbonyl and olefin groups.

However, the polyketone resin does not have sufficiently high flame retardancy and high fire resistance to overcome the battery thermal runaway environment. In order to solve this problem, a flame retardant was added (see "Patent Document 1" below). However, in this case, the manufacturing cost is significantly increased due to the recent surge in flame retardant prices, making widespread application thereof difficult.

### [Prior Art Document]

### [Patent Document]

(Patent Document 1)
KR 10-2024-0022996 A (February 20, 2024)

### SUMMARY OF THE INVENTION

Therefore, the present invention has been made in view of the above problems, and it is an object of the present invention to provide a polyketone resin composition with excellent flame retardancy and high fire resistance without significantly increasing a flame retardant content.

In accordance with the present invention, the above and other objects can be accomplished by the provision of a polyketone resin composition containing 29 to 34 wt% of a polyketone resin, 10 to 50 wt% of glass fiber, 10 to 50 wt% of a fire retardant, and 5 to 8 wt% of a flame retardant.

### DETAILED DESCRIPTION OF THE INVENTION

Hereinafter, the present invention will be described in detail. However, detailed descriptions of well-known functions and configurations that may unnecessarily obscure the subject matter of the present invention will be omitted.

The polyketone resin composition according to the present invention contains 29 to 34 wt% of a polyketone resin, 10 to 50 wt% of glass fiber, 10 to 50 wt% of a fire retardant, and 5 to 8 wt% of a flame retardant.

Furthermore, the polyketone resin composition according to the present invention may further contain 0.2 to 1.0 wt% of tricalcium phosphate.

Furthermore, the polyketone resin composition according to the present invention may further contain 0.1 to 0.5 wt% of an antioxidant.

Furthermore, the polyketone resin composition according to the present invention may further contain 0.7 to 1.5 wt% of a black masterbatch.

The polyketone resin preferably has a structure in which carbon monoxide repeating units, ethylenic unsaturated compound repeating units, and propylenic unsaturated compound repeating units are substantially alternately linked to one another. The polyketone resin having such a structure has a melt index (220°C, 2.16 kg) of 200 to 55 g/10 min, which exhibits excellent molding processability, excellent mechanical and thermal properties, and high flame retardancy, impact resistance, abrasion resistance, chemical resistance, calcium chloride resistance, freeze resistance, moisture absorption resistance, and gas barrier properties, and thus is useful for various applications.

In the present invention, the polyketone resin is preferably used in an amount of 29 to 34 wt% with respect to the total weight of the composition. When the polyketone resin is used in an amount less than 29 wt%, disadvantageously, the effect of the composition on improvement of the mechanical and thermal properties and flame retardancy may be deteriorated. When the polyketone resin is used in an amount exceeding 34 wt%, disadvantageously, the effect of the composition on improvement of high fire resistance may be deteriorated.

The glass fiber, which is an inorganic silicate fiber, is an artificial fiber produced from melted glass and is classified into long fiber and short fiber depending on the manufacturing method and use thereof. Industrially, electric-glass (E-glass) fiber, which has excellent electrical insulation properties, is most commonly used to reinforce resins. The electric-glass (E-glass) fiber has high strength such as tensile strength and is effectively resistant to high temperature since it is manufactured from glass, and it does not corrode due to chemical resistance and improves mechanical properties such as heat resistance and electrical insulation.

The glass fiber used in the present invention may include at least one of long fibers and short fibers. Furthermore, the glass fiber is preferably used in an amount of 10 to 50 wt% with respect to the total weight of the composition. When the glass fiber is used in an amount less than 10 wt%, disadvantageously, the effect of the composition on improvement of strength, heat resistance, and electrical insulation may be reduced. When the glass fiber is used in an amount exceeding 50 wt%, disadvantageously, the effect of the composition on improvement of high fire resistance may be reduced.

The fire retardant functions to improve the fire resistance of the composition and is preferably used in an amount of 10 to 50 wt% with respect to the total weight of the composition. When the glass fiber is used in an amount less than 10 wt%, disadvantageously, the effect of the composition on improvement of fire resistance may be reduced. When the glass fiber is used in an amount exceeding 50 wt%, disadvantageously, the effect of the composition on improvement of strength may be reduced. Therefore, the glass fiber is preferably used in the range defined above.

In the present invention, the fire retardant is preferably borosilicate glass, kaolin, glass beads, mica, magnesium hydroxide, or a fine ceramic.

Borosilicate glass contains silica (SiO₂), boron oxide (B₂O₃), sodium oxide (Na₂O), potassium oxide (K₂O), and aluminum oxide (Al₂O₃) as a main glass-forming component. Borosilicate glass has high durability, a low coefficient of expansion, a low density, and a high softening point compared to other types of glass, and exhibits superior thermal shock resistance and high-temperature stability compared to general glass, and has a melting point of 1,320°C and thus exhibits excellent fire resistance at high temperatures.

Kaolinite having the chemical formula Al₂O₃·2SiO₂·2H₂O is an inorganic substance containing kaolinite and halloysite as main components, has a melting point of 1,750°C and effectively improves thermal stability, chemical resistance, and surface appearance of engineering plastics.

Glass beads are small, round and bead-shaped materials made of glass. They exhibit excellent chemical resistance, have a melting point of 1,350°C, are resistant to high temperatures, are isotropic and thus allow for homogeneous dispersion of components within engineering plastics, and reduce shrinkage and warpage in injection articles to improve dimensional stability.

Mica is a hydrated aluminum silicate mineral and is a rock-forming mineral having a thin plate-like structure. Mica has a general chemical formula of KAl₃Si₃O₁₀(OH)₂ and has a hexagonal crystal structure. Mica has a hardness of 2.5 to 4.0 Mohs and exhibits excellent electrical properties including low conductivity and electrical resistance, thus being used as an insulating material. As an asbestos alternative, Mica exhibits excellent fire resistance, heat resistance, and chemical resistance, and excellent thermal stability due to low thermal conductivity.

Magnesium hydroxide having the chemical formula MgOH₂ has a high endothermic decomposition point of 332°C. Magnesium hydroxide advantageously increases the ignition point when added to other substances or reactions, resulting in reduced smoke generation. Magnesium hydroxide is widely used as a non-polluting inorganic material in wires and cables and thus has an advantage of low smoke density during internal combustion engine/electric vehicle fires when applied to automotive components.

The fine ceramic is a high-performance ceramic material produced from high-purity natural or synthetic inorganic compounds. Representative fine ceramic materials include alumina (Al₂O₃), silicon nitride (Si₃N₄), zirconia (ZrO₂), silicon carbide (SiC) and the like.

Alumina is a fine ceramic material that is the most widely used, is a compound of aluminum and oxygen having the chemical formula Al₂O₃, has a melting temperature of 2,054°C, and exhibits excellent fire and heat resistance, electrical insulation, and high thermal conductivity, which is widely used in the automotive industry, particularly in electric vehicles.

Silicon nitride is a material with high strength and excellent thermal shock resistance. Silicon nitride has a formula of Si₃N₄ which contains nitrogen and silicon, is lightweight, has excellent high-temperature strength and fracture toughness, and exhibits excellent wear resistance, corrosion resistance, and thermal shock resistance. Silicon nitride has a melting point of 1,850°C and is thus used in automotive engine parts, electronic components, industrial machinery components, and various composite materials.

Zirconia is a non-metallic inorganic material, is a high-performance ceramic material having high toughness and wear resistance, and is a zirconium (Zr)-containing compound, which is produced from the mineral zircon (ZrSiO₄). Zirconia has a melting point of 2,715°C and thus is used as a fire retardant material and fire retardant ceramic.

Silicon carbide, which is a compound containing silicon and carbon, exhibits high-temperature strength and excellent wear resistance, has lower resistivity and higher strength and thermal conductivity than silicon, has a melting point of 2,730°C and exhibits excellent physical and chemical properties, and thus is widely used in components used under harsh conditions such as high temperatures, high pressures, and corrosive environments.

The flame retardant improves the flame retardancy of the composition and is preferably used in an amount of 5 to 8 wt% with respect to the total weight of the composition in the present invention. When the flame retardant is used less than 5 wt%, the effect of the composition on improvement of flame retardancy may be deteriorated, and when the flame retardant is used in an amount exceeding 8 wt%, the preparation cost of the composition may increase. Therefore, the flame retardant is preferably used in an amount within the range defined above.

In the present invention, the flame retardant may be a phosphorus-based flame retardant or an inorganic flame retardant.

When the phosphorus-based flame retardant is combusted, various phosphoric acid compounds, such as phosphoric acid, hypophosphorous acid, and polyphosphoric acid, are decomposed into oxyacids, which induces a strong dehydrating action that dehydrates the material and carbonizes the material into a char layer, thereby reducing the amount of flammable material.

Inorganic flame retardants are environmentally friendly. For example, aluminum phosphinate has advantages of excellent corrosion resistance and being free of clumping based on a specific surface treatment.

Tricalcium phosphate (TCP) prevents deterioration of the mechanical properties of polyketone resins and carbonization during extrusion, improves overall processing stability, prevents gelation of polyketone resins or viscosity increases at high temperatures, and minimizes damage to final injection articles. In the present invention, TCP may optionally be used in an amount of 0.2 to 1.0 wt% with respect to the total weight of the composition.

The antioxidant inhibits oxidative decomposition of the composition due to reaction with metallic ions. In the present invention, TCP may optionally be used in an amount of 0.1 to 0.5 wt% with respect to the total weight of the composition.

The black masterbatch is a colorant that imparts black to the composition for use in automotive parts, electronic devices, and other applications. In the present invention, the black masterbatch may optionally be used in an amount of 0.7 to 1.5 wt% with respect to the total weight of the composition.

As such, the polyketone resin composition according to the present invention has excellent flame retardancy and high fire resistance. Therefore, the polyketone resin composition is applicable to all industries that utilize lithium batteries as well as eco-friendly automobiles and energy storage devices.

Hereinafter, the present invention will be described in more detail with reference to examples. However, these examples are provided merely to illustrate the present invention and should be not construed as limiting the scope of the present invention.

The physical properties of the composition specimens prepared according to Comparative Example 1 and Examples 1 to 6 were measured in accordance with the following methods and the results are shown in Tables 1 to 7 below.

### Experimental Example: Physical property measurement method

1) The flame retardancy test was conducted in accordance with UL94. A 20 mm flame was applied to a 0.8 mm thick specimen for 10 seconds, the combustion time of the specimen was measured and then a 20 mm flame was applied for another 10 seconds, and the combustion time of the specimen and the time it took for sparks to form after combustion were measured.
2) The fire resistance test was conducted by applying a 1,200°C LPG torch flame to a 20 cm x 20 cm x 2 mm specimen for 10 minutes from a distance of 5 cm and determining whether or not holes are formed in the specimen.
3) The Torch & Grit test was conducted in accordance with UL2596 by applying a methane gas torch flame of 1,200°C for 15 seconds from a distance of 6 cm to a specimen with a size of 20 cm X 2 cm X 2 mm, and measuring the total number of cycles until a hole was formed, wherein one cycle is defined as a period of time at which 120 mesh sized alumina particles are sprayed at high speed onto the specimen along with the flame for 5 seconds.

### Comparative Example 1: Preparation of polyketone resin/glass fiber/flame retardant/tricalcium phosphate/antioxidant/black masterbatch composition and measurement of physical properties thereof

The polyketone resin, glass fiber, flame retardant, tricalcium phosphate, antioxidant, and black masterbatch were mixed in the composition ratios shown in Table 1 below, were then compounded using an extruder to prepare specimens, the physical properties of the specimens were measured, and the results are shown in Table 1 below.

**[Table 1]**

| Item | | Comparative Example 1 |
|---|---|---|
| Composition ratio (wt%) | Polyketone resin | 59.6 |
| | Glass fiber | 30.0 |
| | Flame retardant | 9.0 |
| | Tricalcium phosphate | 0.3 |
| | Antioxidant | 0.1 |
| | Black masterbatch | 1.0 |
| Flame retardancy (UL94 grade) | | V-0 |
| Fire resistance (min) | | 1 |
| Torch & Grit (cycle) | | 1 |

### Example 1: Preparation of polyketone resin/glass fiber/borosilicate glass/flame retardant/tricalcium phosphate/antioxidant/black masterbatch composition and measurement of physical properties thereof

### Examples 1-1 to 1-5

Specimens were prepared in the same manner as in Comparative Example 1 using the raw materials and composition ratios listed in Table 2 below. The physical properties of the specimens were measured and the results are shown in Table 2 below.

**[Table 2]**

| Item | | Example 1-1 | Example 1-2 | Example 1-3 | Example 1-4 | Example 1-5 |
|---|---|---|---|---|---|---|
| Composition ratio (wt%) | Polyketone resin | 29.0 | 31.0 | 32.0 | 33.0 | 34.0 |
| | Glass fiber | 10.0 | 20.0 | 30.0 | 40.0 | 50.0 |
| | Borosilicate glass | 50.0 | 40.0 | 30.0 | 20.0 | 10.0 |
| | Flame retardant | 8.0 | 7.0 | 6.0 | 5.0 | 5.0 |
| | Tricalcium phosphate | 1.0 | 0.5 | 0.5 | 0.5 | 0.2 |
| | Antioxidant | 0.5 | 0.5 | 0.5 | 0.5 | 0.1 |
| | Black masterbatch | 1.5 | 1.0 | 1.0 | 1.0 | 0.7 |
| Flame retardancy (UL94 grade) | | V-0 | V-0 | V-0 | V-0 | V-0 |
| Fire resistance (min) | | 5 | 8 | 8 | 10 | 10 |
| Torch & Grit (cycle) | | 5 | 7 | 7 | 10 | 15 |

### Example 2: Preparation of polyketone resin/glass fiber/kaolinite/flame retardant/tricalcium phosphate/antioxidant/black masterbatch composition and measurement of physical properties thereof

### Examples 2-1 to 2-5

Specimens were prepared in the same manner as in Comparative Example 1 using the raw materials and composition ratios listed in Table 3 below. The physical properties of the specimens were measured and the results are shown in Table 3 below.

**[Table 3]**

| Item | | Example 2-1 | Example 2-2 | Example 2-3 | Example 2-4 | Example 2-5 |
|---|---|---|---|---|---|---|
| Composition ratio (wt%) | Polyketone resin | 29.0 | 31.0 | 32.0 | 33.0 | 34.0 |
| | Glass fiber | 10.0 | 20.0 | 30.0 | 40.0 | 50.0 |
| | Kaolinite | 50.0 | 40.0 | 30.0 | 20.0 | 10.0 |
| | Flame retardant | 8.0 | 7.0 | 6.0 | 5.0 | 5.0 |
| | Tricalcium phosphate | 1.0 | 0.5 | 0.5 | 0.5 | 0.2 |
| | Antioxidant | 0.5 | 0.5 | 0.5 | 0.5 | 0.1 |
| | Black masterbatch | 1.5 | 1.0 | 1.0 | 1.0 | 0.7 |
| Flame retardancy (UL94 grade) | | V-0 | V-0 | V-0 | V-0 | V-0 |
| Fire resistance (min) | | 5 | 8 | 8 | 10 | 10 |
| Torch & Grit (cycle) | | 5 | 7 | 7 | 10 | 15 |

### Example 3: Preparation of polyketone resin/glass fiber/glass beads/flame retardant/tricalcium phosphate/antioxidant/black masterbatch composition and measurement of physical properties thereof

### Examples 3-1 to 3-5

Specimens were prepared in the same manner as in Comparative Example 1 using the raw materials and composition ratios listed in Table 4 below. The physical properties of the specimens were measured and the results are shown in Table 4 below.

**[Table 4]**

| Item | | Example 3-1 | Example 3-2 | Example 3-3 | Example 3-4 | Example 3-5 |
|---|---|---|---|---|---|---|
| Compos ition ratio (wt%) | Polyketone resin | 29.0 | 31.0 | 32.0 | 33.0 | 34.0 |
| | Glass fiber | 10.0 | 20.0 | 30.0 | 40.0 | 50.0 |
| | Glass beads | 50.0 | 40.0 | 30.0 | 20.0 | 10.0 |
| | Flame retardant | 8.0 | 7.0 | 6.0 | 5.0 | 5.0 |
| | Tricalcium phosphate | 1.0 | 0.5 | 0.5 | 0.5 | 0.2 |
| | Antioxidant | 0.5 | 0.5 | 0.5 | 0.5 | 0.1 |
| | Black masterbatch | 1.5 | 1.0 | 1.0 | 1.0 | 0.7 |
| Flame retardancy (UL94 grade) | | V-0 | V-0 | V-0 | V-0 | V-0 |
| Fire resistance (min) | | 5 | 8 | 8 | 10 | 10 |
| Torch & Grit (cycle) | | 5 | 7 | 7 | 10 | 15 |

### Example 4: Preparation of polyketone resin/glass fiber/mica/flame retardant/tricalcium phosphate/antioxidant/black masterbatch composition and measurement of physical properties thereof

### Examples 4-1 to 4-5

Specimens were prepared in the same manner as in Comparative Example 1 using the raw materials and composition ratios listed in Table 5 below. The physical properties of the specimens were measured and the results are shown in Table 5 below.

**[Table 5]**

| Item | | Example 4-1 | Example 4-2 | Example 4-3 | Example 4-4 | Example 4-5 |
|---|---|---|---|---|---|---|
| Compos ition ratio (wt%) | Polyketone resin | 29.0 | 31.0 | 32.0 | 33.0 | 34.0 |
| | Glass fiber | 10.0 | 20.0 | 30.0 | 40.0 | 50.0 |
| | Mica | 50.0 | 40.0 | 30.0 | 20.0 | 10.0 |
| | Flame retardant | 8.0 | 7.0 | 6.0 | 5.0 | 5.0 |
| | Tricalcium phosphate | 1.0 | 0.5 | 0.5 | 0.5 | 0.2 |
| | Antioxidant | 0.5 | 0.5 | 0.5 | 0.5 | 0.1 |
| | Black masterbatch | 1.5 | 1.0 | 1.0 | 1.0 | 0.7 |
| Flame retardancy (UL94 grade) | | V-0 | V-0 | V-0 | V-0 | V-0 |
| Fire resistance (min) | | 5 | 8 | 8 | 10 | 10 |
| Torch & Grit (cycle) | | 5 | 7 | 7 | 10 | 15 |

### Example 5: Preparation of polyketone resin/glass fiber/magnesium hydroxide/flame retardant/tricalcium phosphate/antioxidant/black masterbatch composition and measurement of physical properties thereof

### Examples 5-1 to 5-5

Specimens were prepared in the same manner as in Comparative Example 1 using the raw materials and composition ratios listed in Table 6 below. The physical properties of the specimens were measured and the results are shown in Table 6 below.

**[Table 6]**

| Item | | Example 5-1 | Example 5-2 | Example 5-3 | Example 5-4 | Example 5-5 |
|---|---|---|---|---|---|---|
| Compos ition ratio (wt%) | Polyketone resin | 29.0 | 31.0 | 32.0 | 33.0 | 34.0 |
| | Glass fiber | 10.0 | 20.0 | 30.0 | 40.0 | 50.0 |
| | Magnesium hydroxide | 50.0 | 40.0 | 30.0 | 20.0 | 10.0 |
| | Flame retardant | 8.0 | 7.0 | 6.0 | 5.0 | 5.0 |
| | Tricalcium phosphate | 1.0 | 0.5 | 0.5 | 0.5 | 0.2 |
| | Antioxidant | 0.5 | 0.5 | 0.5 | 0.5 | 0.1 |
| | Black masterbatch | 1.5 | 1.0 | 1.0 | 1.0 | 0.7 |
| Flame retardancy (UL94 grade) | | V-0 | V-0 | V-0 | V-0 | V-0 |
| Fire resistance (min) | | 5 | 8 | 8 | 10 | 10 |
| Torch & Grit (cycle) | | 5 | 7 | 7 | 10 | 15 |

### Example 6: Preparation of polyketone resin/glass fiber/fine ceramic/flame retardant/tricalcium phosphate/antioxidant/black masterbatch composition and measurement of physical properties thereof

### Examples 6-1 to 6-5

Specimens were prepared in the same manner as in Comparative Example 1 using the raw materials and composition ratios listed in Table 7 below. The physical properties of the specimens were measured and the results are shown in Table 7 below.

**[Table 7]**

| Item | | Example 6-1 | Example 6-2 | Example 6-3 | Example 6-4 | Example 6-5 |
|---|---|---|---|---|---|---|
| Compos ition ratio (wt%) | Polyketone resin | 29.0 | 31.0 | 32.0 | 33.0 | 34.0 |
| | Glass fiber | 10.0 | 20.0 | 30.0 | 40.0 | 50.0 |
| | Fine ceramic | 50.0 | 40.0 | 30.0 | 20.0 | 10.0 |
| | Flame retardant | 8.0 | 7.0 | 6.0 | 5.0 | 5.0 |
| | Tricalcium phosphate | 1.0 | 0.5 | 0.5 | 0.5 | 0.2 |
| | Antioxidant | 0.5 | 0.5 | 0.5 | 0.5 | 0.1 |
| | Black masterbatch | 1.5 | 1.0 | 1.0 | 1.0 | 0.7 |

| Flame retardancy (UL94 grade) | V-0 | V-0 | V-0 | V-0 | V-0 | |
|---|---|---|---|---|---|---|
| Fire resistance (min) | 5 | 8 | 8 | 10 | 10 | |
| Torch & Grit (cycle) | 5 | 7 | 7 | 10 | 15 | |

The results in Tables 1 to 7 above show that Examples 1 to 6, which contain a flame retardant, exhibit superior fire resistance and thermal runaway prevention performance compared to Comparative Example 1, which does not contain an inorganic reinforcing material.

In particular, the results of the torch & grit test to determine thermal runaway prevention performance show that all of Examples 1 to 6 have at least 5 cycles. 10 cycles or more is the standard required for electric vehicle battery housings (battery module assemblies, BMAs) and electric vehicle battery-related components, 7 cycles or more is the standard required for electric vehicle busbars and high-voltage components, and 5 cycles or more is the standard required for other high-flame retardancy components of electric vehicles. Therefore, all of Examples of the present invention are polyketone resin compositions with excellent flame retardancy and high flame resistance that can be used in eco-friendly vehicles (electric, hydrogen-electric, hybrid, and plug-in hybrid vehicles) and energy storage devices.

As is apparent from the above description, the present invention provides a polyketone resin composition that significantly improves the flame retardancy and high fire resistance of polyketone without significantly increasing the content of a flame retardant and thus is applicable to all industries such as eco-friendly automobiles, energy storage devices, and other industries using lithium batteries.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A polyketone resin composition comprising:
29 to 34 wt% of a polyketone resin;
10 to 50 wt% of glass fiber;
10 to 50 wt% of a fire retardant; and
5 to 8 wt% of a flame retardant,
wherein a total of the glass fiber and the fire retardant is 60 wt%, and the polyketone resin composition has a fire resistance test performance of at least 5 minutes and a torch & grit test performance of at least 5 cycles.

2. The polyketone resin composition according to claim 1, wherein the fire retardant is borosilicate glass.

3. The polyketone resin composition according to claim 1, wherein the fire retardant is kaolinite.

4. The polyketone resin composition according to claim 1, wherein the fire retardant is a glass bead.

5. The polyketone resin composition according to claim 1, wherein the fire retardant is mica.

6. The polyketone resin composition according to claim 1, wherein the fire retardant is magnesium hydroxide.

7. The polyketone resin composition according to claim 1, wherein the fire retardant is a fine ceramic.

8. The polyketone resin composition according to claim 1, further comprising 0.2 to 1.0 wt% of tricalcium phosphate.

9. The polyketone resin composition according to claim 1 or 8, further comprising 0.1 to 0.5 wt% of an antioxidant.

10. The polyketone resin composition according to claim 9, further comprising 0.7 to 1.5 wt% of a black masterbatch.
